# EUROPEAN PATENT SPECIFICATION

(11) **EP 0 417 050 B1**
(45) Date of publication and mention of the grant of the patent: **19.10.1994**
(21) Application number: 90830372.0
(22) Date of filing: 10.08.1990
(51) Int. Cl.: B23F 23/12, B24B 53/085, B23Q 17/24

(54) **Equipment for dressing worm type grinding tools in gear grinding machinery**
Vorrichtung zum Abrichten von schneckenartigen Schleifwerkzeugen in Zahnradschleifmaschinen
Dispositif de dressage pour des outils de meulage sous forme de vis sans fin dans des machines à meuler des roues d'engrenage

(30) Priority: 07.09.1989 IT 361289
(43) Date of publication of application: 13.03.1991
(73) Proprietor: PFAUTER ITALIA S.P.A., 40050 Villanova di Castenaso (Bologna) (IT)
(72) Inventor: Negri, Roberto, I-40068 San Lazzaro di Savena (Bologna) (IT)
(74) Representative: Lanzoni, Luciano

(56) References cited:
- EP-A- 0 074 518
- CH-A- 591 927
- FR-A- 2 372 678
- FR-A- 2 620 366

## Description

The invention relates to equipment for dressing grinding tools, in particular worm type tools as utilized in gear grinding machines according to the precharacterising part of the claim; see FR-A-2 620 366.

The art field of gear grinding machinery embraces essentially two types of machine, which differ from one another according to the method of grinding implemented.

In machines of one type work is ground by one or more tools mounted coaxially and symmetrical with each other, whereas in an other method implemented by the other type of machine, the profile of the work is generated.

Grinding machines of the second type mentioned use a tool of worm-like appearance that effectively meshes with the work during the grinding action, describing the movements typical of cutting (as in six axis gear cutting machines, for example) and generating the tooth as an envelope of straight lines rolling around the base circle.

The grinding tools in machines of this second type wild generally be sharpened, or dressed, on the grinding machine itself; this makes for a swifter and more accurate operation, avoiding any waste of time and risk of error caused by transferring the tools from the machine to remote dressing equipment and back again to the machine.

When the moment arises to dress the grinding tool in a conventional machines, the operator must move around to the rear side of the machine, opposite to the side from which the machine is normally run, and step up onto a platform in order to gain both sight of and access to the dressing station. The operator then makes a visual check on the mutual positions of the grinding tool and diamond dressing disks, effected in working conditions that are by no means ideal, and assisted by a light source set beneath the grinding tool, and proceeds to bring the diamond into the desired contact with the tool by turning handwheels linked mechananically to a slide supporting the dresser assembly.

The grinding tool is now set in rotation, and with the ratio between the speed of this rotation and the axial feed velocity of the dresser mechanically fixed, the diamond is made to accomplish a series of axial traverses, determined by the pitch of the tool, thereby generating the longitudinal grinding profile. Increments in dressing depth are selected by the operator, who effects the corresponding adjustments by turning the handwheels to shift the dresser assembly, continuing to manoeuvre from the rear of the machine.

The procedure thus outlined is notably laborious, inconvenient and relatively inaccurate, depending as it does on the ability of the operator to judge the position of the diamond in relation to the grinding tool correctly, and to do so in precarious operating conditions.

Moreover, the fact that the operator has to stand on a platform at the rear of the machine renders the dressing procedure not only awkward, but also hazardous, given the risk of an accidental fall from the platform.

The time required to dress a tool in the manner described is also somewhat lengthy, and the cost of the machines described above is increased by the need to complement the main control panel, located at the front and governing the various operations involved in normal running, with a second panel situated at the rear of the machine which serves exclusively to provide control over the dressing operation. An alternative, though somewhat costly and inconvenient solution, is to render the control panel mobile and thus enable its being transferred from place to place as required, according to where the operator needs to stand.

The object of the present invention is to provide equipment for dressing worm type grinding tools in gear grinding machines from which the drawbacks of the prior art described above are absent, and by means of which the operation of offering a diamond to a grinding tool for dressing can be rendered simple, swift, secure and economical.

The stated object is fully realized, according to the present invention, in equipment for dressing worm type grinding tools having the features of the claim.

The invention will now be described in detail, by way of example, with the aid of the accompanying drawings, in which:
- fig 1 is a schematic representation of equipment according to the invention, viewed in plan;
- fig 2 is a detail of fig 1, viewed in elevation;
- fig 3 is the schematic representation of a detail of fig 1;
- fig 4 is the schematic representation of a detail of fig 3.

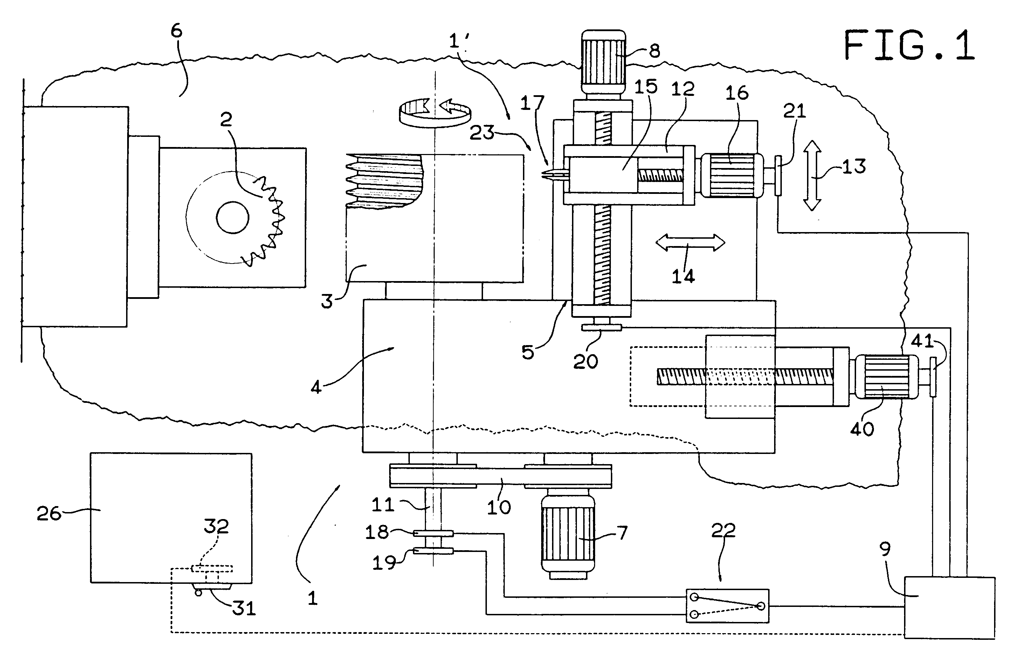

Referring first to fig 1 of the drawings, 1 denotes a numerical control machine, in its entirety, of the type designed to grind gears 2 using a grinding tool 3 of worm embodiment; conventionally, such a tool is dressed periodically *in situ*, i.e. without being removed from the grinding machine.

The machine 1 incorporates dressing equipment 1′ consisting in two spindle heads 4 and 5, carrying the tool and the diamond respectively, supported movably by a bed 6 and connected the one to a pair of motors 40 and 7, the other to a single motor 8, operated from an NC control circuit 9.

The motor denoted 7 is connected by way of a belt drive 10 with the shaft 11 of the tool 3 in such a way as to set the tool in rotation, whereas the motor denoted 8 drives a carriage 12 to which the diamond spindle head 5 is mounted, and which can thus be traversed in the directions indicated by the arrow denoted 13. The motor denoted 40 is rigidly associated with the machine bed 6, and serves to traverse the tool spindle head 4 in the directions of the arrow denoted 14.

The carriage 12 also supports a cross slide 15, driven by a further motor 16, which is capable of movement likewise in the direction of the arrow denoted 14, transversely to the axis of the tool 3, and serves to select the entry depth at which two diamond disks 17, carried by the relative spindle head 5, are offered to the tool 3.

The drive motors 7, 8, 16 and 40 are all variable speed, reversible electric motors. 18 and 19 denote two separate pulse generators or encoders mutually timed and keyed to the shaft 11 of the tool 3, which are wired into the control circuit 9, as also are similar encoders 20, 21 and 41 associated with the remaining motors 8, 16 and 40 respectively.

The encoders 18 and 19 first mentioned are designed to generate a number of pulses per unit of time inversely proportionate to the angular velocity of the grinding tool 3, and connected to the control circuit 9 by way of a mechanical or electronic switch 22 that permits of utilizing either one 18 or the other 19 according to the operation in hand, i.e. grinding work 2 or dressing the tool 3.

Proceeding to grind a gear with the arrangement thus described, the grinding tool 3 will be set in rotation at the usual speed, and the spindle head 4 traversed into the work 2 by the relative motor 40 in a conventional manner that needs no description.

In the case of the dressing operation, on the other hand, the tool 3 will first be distanced from the work 2, then repositioned by traversing the spindle head 4 in conventional manner through operation of the motor 40, to the point at which the tool 3 is brought into the dressing station, denoted 23.

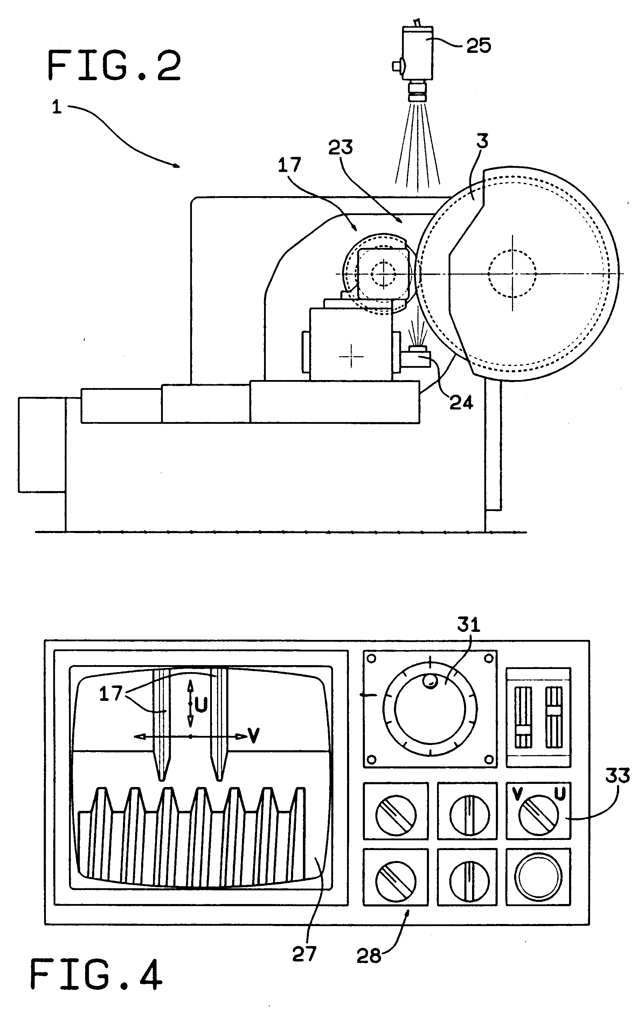

It will be seen from the illustration of fig 2 that the equipment further comprises a light source 24, positioned directly below the dressing station 23 substantially in alignment with the zone of contact between the diamond disks 17 and the tool 3, from which a beam of light is direct upwards.

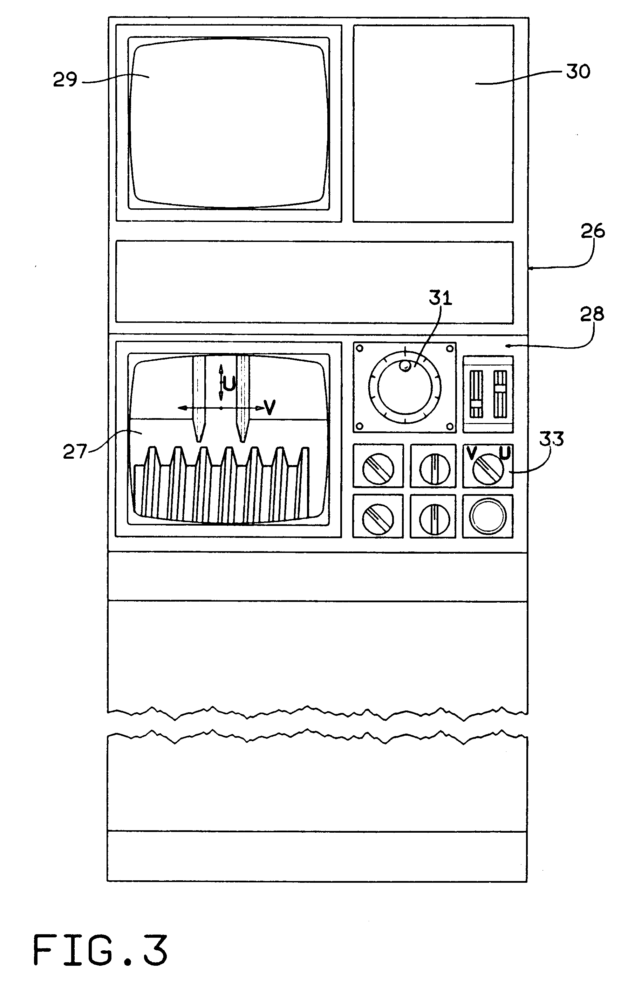

Also illustrated in fig 2 are telecamera means 25 positioned above the dressing station 23, mounted to the bed 6 and trained onto the station beneath. Reverting to fig 1 once again, 26 denotes a console sited near to the grinding machine 1 in a position (not necessarily that of the drawing) such as will enable the operator to oversee the machine to best possible advantage, and comprising all the controls and instrumentation (shown in fig 3) necessary for normal running of the machine.

Referring in particular to fig 3, the console 26 comprises a video 27 connected to the telecamera 25 in conventional manner, a control panel 28 (see also fig 4) through which the operation of dressing the tool 3 is conducted, a further video screen 29 displaying operating parameters or self-diagnostics messages relative to the machine 1, likewise in conventional manner, and a button panel 30 used to control normal grinding operations.

The control panel 28 presents a plurality of knobs and selectors connected to the NC circuit 9 and serving to position the motors 7, 8, 16 and 40 in readiness for and during dressing operations.

More exactly, 31 denotes a handwheel forming part of control means that are used when setting up the machine for the dressing operation to govern the rotation of the motors 8 and 16 which position the diamond spindle head 5.

32 denotes a dual pattern encoder coupled to the handwheel 31 and designed to generate one of two relative pulse trains, appearing as square waves phased 90° apart, according to the direction in which the handwheel 31 is rotated.

When either one of these trains is generated, the corresponding signal is relayed in conventional manner to the NC control circuit 9 and has the effect, likewise conventionally, of influencing the operating parameters of one of the diamond motors 8 and 16, i.e. start/stop, running speed, direction of rotation and travel.

The same control means aforementioned also comprise a two-position knob 33 associated with a switch (not illustrated), by means of which control is obtained over one or other motor 8 or 16 according to the position selected. With the knob 33 in the first of the two positions possible, rotation of the handwheel 31 by the operator in one direction or the other causes the diamond disks 17 to shift back and forth along their own axes (arrow 13); with the knob 33 in the second position, rotation of the handwheel 31 will move the disks 17 nearer to or farther from the tool 3 (arrow 14).

Thus, provided with a comprehensive image of the mutual positions of diamond 17 and tool 3 by way of the relative video 27 (fig 4), the operator can set the knob 33 and turn the handwheel 31 (and indeed operate all other accessory controls provided by the panel 28, the precise functions of which are not described, not being central to the invention) to position the tool 3 and the disks 17 as required while retaining uninterrupted visual control over the movement of the diamond spindle head 5 produced with the handwheel 31.

With positioning completed, the dressing operation proper can commence, controlled in conventional manner by the NC circuit 9, during the course of which the tool 3 rotates about its own axis at a selected speed and the disks 17, rotating about their axes, are traversed along the tool (arrow 13) the requisite number of times at the prescribed velocity.

It will be appreciated from the foregoing that the dressing procedure implemented by the operator is made notably accurate and simple by virtue of the console 26, which also accommodates those controls used in the regular production grinding of work 2; accordingly, there is no need for the operator to change position, neither for unwarranted exposure to physical risk and difficult working conditions.

## Claims

1. Equipment for dressing worm type grinding tools as used in gear grinding machinery, comprising a tool spindle head (5), a bed (6) by which the spindle heads are supported, drive means (40, 8-16) associated with and serving to invest each spindle head (4, 5) with movement in prescribed directions such that the tool spindle head (4) and diamond spindle head (5) are brought to bear one alongside the other at a dressing station (23) in readiness for the operation whereby the grinding tool (3) is dressed, utilizing diamond disks (17) mounted to the relative spindle head (5), and means (31, 33) by which to control the drive means (8-16)
**characterised**
in that it comprises at least one light source (24) positioned directly below to the dressing station (23) substantially in alignment with the zone of contact betweeen the diamond disks (17) and the tool (3), telecamera means (25), positioned above the dressing station (23) and designed to monitor the said dressing station (23), a video (27) designed to display the image produced by the telecamera (25), and thus vary the mutual position of the tool and diamond spindle heads (4, 5) following visual verification of the position by way of the video image.

## Patentansprüche

1. Vorrichtung zum Abrichten von schneckenartigen Schleifwerkzeugen, wie sie in Zahnradschleifmaschinen verwendet werden, enthaltend einen Werkzeugspindelkopf (4) und einen Diamantspindelkopf (5), ein Bett (6), von welchem die Spindelköpfe getragen werden, Antriebsmittel (40, 8, 16), die einem jeden Spindelkopf (4, 5) zugeordnet sind und dazu dienen, diese in bestimmte Richtungen zu verschieben, und zwar so, dass der Werkzeugspindelkopf (4) und der Diamantspindelkopf (5) in einer Abrichtstation (23) sich einer entlang dem anderen erstreckt, bereit für den Abrichtvorgang, bei welchem das Schleifwerkzeug (3) abgerichtet wird, wobei Diamantscheiben (17) verwendet werden, montiert an dem entsprechenden Spindelkopf (5), sowie Mittel (31, 33), durch welche die Antriebsmittel (8, 16) gesteuert werden,
**dadurch gekennzeichnet,**
dass sie wenigstens eine Lichtquelle (24) enthält, die unmittelbar unterhalb der Abrichtstation (23) angeordnet ist, im wesentlichen ausgerichtet zu dem Bereich des Kontaktes zwischen den Diamantscheiben (17) und dem Werkzeug (3), eine Telekamera (25), positioniert oberhalb der Abrichtstation (23) und dazu bestimmt, die genannte Abrichtstation (23) zu überwachen, einen Bildschirm (27), dazu bestimmt, das von der Telekamera (25) aufgenommene Bild sichtbar zu machen und somit die verschiedenen gegenseitigen Positionen der Werkzeug- und Diamantspindelköpfe (4, 5), wobei über den Bildschirm eine Sichtkontrolle der Position erfolgen kann.

## Revendications

1. Dispositif de dressage pour des outils de meulage sous forme de vis sans fin à utiliser dans des machines à meuler des roues d'engrenage, comprenant deux têtes porte-outil (4 et 5) portant respectivement la meule et le diamant, une embase (6) supportant les tètes porteoutil, des moyens de commande (40, 8-16) associés aux têtes porte-outil (4, 5) et destinés à imprimer à chaque tête porte-outil des mouvements dans des directions prédéterminées de telle façon que la tête porte-meule (4) et la tète porte-diamant (5) sont amenées à se placer l'une au contact de l'autre prêtes au fonctionnement, à un poste de dressage (23), de sorte que l'outil de meulage (3) est dressé en utilisant des disques diamantés (17) montés sur la respective tête porte-outil (5), et des moyens de réglage (31, 33) des moyens de commande (8-16),
caractérisé
en ce qu'il comporte au moins une source lumineuse (24) positionnée directement au-dessous du poste de dreassage (23) sensiblement en alignement avec la zone de contact entre les disques diamantés (17) et l'outil (3), des moyens prévoyant une caméra vidéo (25) positionnés audessus du poste de dressage (23) et destinés à contrôler ledit poste de dressage (23), une console de visualisation (27) destinée a visualiser l'image produite par la caméra (25), et ainsi varier la position réciproque des têtes porte-meule et porte-diamant (4, 5) à la suite de la vérification visuelle de la position au moyen de l'image vidéo.
